(19) Europäisches Patentamt
European Patent Office
Office européen des brevets

(11) **EP 4 218 066 B1**

(12) **EUROPEAN PATENT SPECIFICATION**

(45) Date of publication and mention
of the grant of the patent:
**31.12.2025 Bulletin 2026/01**

(21) Application number: **21778029.5**

(22) Date of filing: **16.09.2021**

(51) International Patent Classification (IPC):
$H01M\ 4/131$ (2010.01)   $H01M\ 4/1391$ (2010.01)
$H01M\ 4/36$ (2006.01)   $H01M\ 4/525$ (2010.01)
$H01M\ 10/052$ (2010.01)   $C01G\ 53/44$ (2025.01)
$C01G\ 53/82$ (2025.01)

(52) Cooperative Patent Classification (CPC):
**H01M 4/131; C01G 53/44; C01G 53/82;
H01M 4/1391; H01M 4/366; H01M 4/525;
H01M 10/052;** Y02E 60/10

(86) International application number:
**PCT/EP2021/075435**

(87) International publication number:
**WO 2022/063669 (31.03.2022 Gazette 2022/13)**

(54) **PROCESS FOR THE MANUFACTURE OF A COATED CATHODE ACTIVE MATERIAL**

VERFAHREN ZUR HERSTELLUNG EINES BESCHICHTETEN KATHODENAKTIVMATERIALS

PROCÉDÉ DE FABRICATION D'UN MATÉRIAU ACTIF DE CATHODE REVÊTUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2020 EP 20198321**

(43) Date of publication of application:
**02.08.2023 Bulletin 2023/31**

(73) Proprietor: **BASF SE
67056 Ludwigshafen am Rhein (DE)**

(72) Inventors:
• **HAN, Zhenji
Amagasaki, Hyogo 660-0083 (JP)**
• **MATSUMOTO, Masatoshi
Tokyo, Tokyo 103-0022 (JP)**
• **NAKAYAMA, Jumpei
Yamaguchi, Yamanashi 756-0847 (JP)**
• **KASHIWAGI, Junji
Yamaguchi, Yamanashi 756-0847 (JP)**

(74) Representative: **BASF IP Association
BASF SE
GBI - Z078
67056 Ludwigshafen (DE)**

(56) References cited:
**WO-A1-2020/069882      WO-A1-2020/069886
US-A1- 2010 273 057      US-A1- 2019 393 494**

**Description**

The present invention is directed towards a process for the manufacture of a coated cathode active material as defined in claim 1.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Currently, a certain interest in so-called Ni-rich electrode active materials may be observed, for example electrode active materials that contain 75 mole-% or more of Ni, referring to the total TM content.

One problem of lithium ion batteries - especially of Ni-rich electrode active materials - is attributed to undesired reactions on the surface of the electrode active materials. Such reactions may be a decomposition of the electrolyte or the solvent or both. It has thus been tried to protect the surface without hindering the lithium exchange during charging and discharging. Examples are attempts to coat the electrode active materials with, e.g., aluminium oxide or calcium oxide, see, e.g., US 8,993,051.

Other theories assign undesired reactions to free LiOH or $Li_2CO_3$ on the surface. Attempts have been made to remove such free LiOH or $Li_2CO_3$ by washing the electrode active material with water, see, e.g., JP 4,789,066 B, JP 5,139,024 B, and US2015/0372300. However, in some instances it was observed that the properties of the resultant electrode active materials did not improve. WO 2020/069886 A1 discloses a process for making an at least partially coated electrode active material.

It was an objective of the present invention to provide a process for making Ni-rich electrode active materials with excellent electrochemical properties. It was also an objective to provide Ni-rich electrode active materials with excellent electrochemical properties.

Accordingly, the process defined at the outset has been found, hereinafter also referred to as "inventive process". The inventive process comprises the following steps:

(a) providing a particulate electrode active material according to general formula $Li_{1+x}TM_{1-x}O_2$, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni,

(b) treating said particulate electrode active material with an aqueous solution of at least one heteropoly acid selected from phosphotungstic acid, phosphomolybdic acid, tungstosilicic acid, molybdosilicic acid, and from their respective ammonium and lithium salts , thereby depositing at least one element selected from Mo, W, Si and P on the surface of said particulate electrode active material, wherein said treatment is supported by mixing operations selected from shaking, stirring and shearing,

(c) removing the water by filtration,

(d) treating the solid residue obtained from step (c) with at least one water-soluble compound of Al or B or Sb or at least one heteropoly acid or its respective ammonium or lithium salt by adding least one compound of Al or B or Sb as a particulate solid or by adding the at least one compound of Al or Sb or heteropoly acid as aqueous slurry or solution, thereby depositing at least one element selected from Al, B, Sb, Mo, W, Si, and P, on the surface of said solid residue from step (c), and

(e) treating the residue obtained from step (d) thermally, wherein the compound added in step (d) is different from the compound contained in the aqueous solution in step (b) with respect to the metal.

The inventive process comprises five steps, (a), (b), (c), (d), and (e), in the context of the present invention also referred to as step (a) and step (b) and step (c) and step (d) and step (e), respectively. Steps (b) and (c) may be commenced simultaneously or preferably subsequently. Steps (b) and (c) may be performed simultaneously or subsequently or, preferably, at least partially overlapping or simultaneously. Step (d) is performed after completion of step (c).

The inventive process starts off from an electrode active material according to general formula $Li_{1+x}TM_{1-x}O_2$, wherein TM comprises Ni and, optionally, at least one transition metal selected from Co and Mn, and, optionally, at least one element selected from Al, Mg and Ba, and, wherein at least 50 mole-% of TM is Ni, preferably at least 75 mole-%, and x is in the range of from zero to 0.2, preferably from 0.05 to 0.2. Said material is hereinafter also referred to as starting material.

In one embodiment of the present invention the starting material has an average particle diameter (D50) in the range of from 3 to 20 $\mu$m, preferably from 4 to 16 $\mu$m. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the starting material has a specific surface (BET), hereinafter also referred to as "BET surface", in the range of from 0.1 to 2.0 $m^2/g$. The BET surface may be determined by nitrogen adsorption after outgassing of the sample at 200°C for 30 minutes or more and beyond this accordance with DIN ISO 9277:2010.

In one embodiment of the present invention, the particulate material provided in step (a) has a moisture content in the range of from 20 to 2,000 ppm, determined by Karl-Fischer titration, preferred are 50 to 1,200 ppm.

In one embodiment of the present invention, the variable TM corresponds to general formula (I)

$$(Ni_aCo_bMn_c)_{1-d}M^1_d \qquad (I)$$

with $a + b + c = 1$ and

a being in the range of from 0.6 to 0.99, preferably from 0.75 to 0.95, more preferably from 0.85 to 0.95,

b being in the range of from zero or 0.01 to 0.2, preferably from 0.025 to 0.2, more preferably from 0.025 to 0.1,

c being in the range of from zero to 0.2, preferably from 0.025 to 0.2, more preferably from 0.05 to 0.1,

d being in the range of from zero to 0.1, preferably from zero to 0.04,

$M^1$ is at least one of Al, Mg, Ta, Ti, Ge, Nb, Mo, W and Zr, preferably at least one of Al, Ti, Zr and W.

In one embodiment of the present invention, the variable c is zero, $M^1$ is Al, and d is in the range of from 0.01 to 0.05.

In another embodiment of the present invention, the variable TM corresponds to general formula (I a)

$$(Ni_{a*}Co_{b*}Al_{e*})_{1-d*}M^2_{d*} \qquad (I\ a)$$

with $a* + b* + c* = 1$ and

a* being in the range of from 0.75 to 0.95, preferably from 0.88 to 0.95,

b* being in the range of from 0.025 to 0.2, preferably from 0.025 to 0.1,

e* being in the range of from 0.01 to 0.2, preferably from 0.015 to 0.04,

d* being in the range of from zero to 0.1, preferably from zero to 0.02,

$M^2$ is at least one of W, Mo, Ti or Zr.

The variable x is in the range of from zero to 0.2.

In one embodiment of the present invention TM corresponds to general formula (I) and x is in the range from zero to 0.2, preferably from zero to 0.1 and even more preferably 0.01 to 0.05.

In one embodiment of the present invention TM corresponds to general formula (I a) and x is in the range of from -0.05 to zero.

In one embodiment of the present invention, TM is selected from $Ni_{0.6}Co_{0.2}Mn_{0.2}$, $Ni_{0.7}Co_{0.2}Mn_{0.1}$, $Ni_{0.8}Co_{0.1}Mn_{0.1}$, $Ni_{0.83}Co_{0.12}Mn_{0.05}$, $Ni_{0.89}Co_{0.055}Al_{0.055}$, $Ni_{0.9}Co_{0.045}Al_{0.045}$ and $Ni_{0.85}Co_{0.1}Mn_{0.05}$.

The electrode active material provided in step (a) is usually free from conductive carbon, that means that the conductive carbon content of starting material is less than 1% by weight, referring to said starting material, preferably 0.001 to 1.0 % by weight.

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of the starting material.

In step (b), said particulate electrode active material is treated with an aqueous solution of at least one heteropoly acid or of its respective ammonium or lithium salt, thereby depositing at least one element selected from Mo, W, Si and P on the surface of said particulate electrode active material. Elements selected from W, Si and P are preferably deposited when a heteropoly acid is used.

Such heteropoly acids - or their respective ammonium or lithium salts - may have a solubility of at least 10 g/l water, determined at 20°C. When determining the solubility, $H_2O$ or ammonia ligands of such compounds are neglected.

In one embodiment of the present invention, heteropoly acid used in step (b) is selected from phosphotungstic acid, phosphomolybdic acid, tungstosilicic acid, molybdosilicic acid and combinations of at least two of the foregoing, and their respective ammonium and lithium salts, for example the mono-, di- or triammonium salts and the mono-, di- and trilithium salts. Preferred are heterpolyacids of tungsten, especially phosphotungstic acid and tungstosilicic acid and their respective ammonium and lithium salts, for example the mono-, di- or triammonium salts.

Examples of heteropoly acids are $M^3_3[PW_{12}O_{40}]$, $M^3[PW_{12}O_{40}]$, $M^3_4[SiW_{12}O_{40}]$, $M^3_2[SiW_{12}O_{40}]$, $M^3_9[(W_9O_{34})$, $M^3_6(P_2W_{21}O_{71})$, $M^3_3(PW_{12}O_{40})$, $M^3_4(SiW_{12}O_{40})$, $M^3_6(P_2W_{18}O_{62})$; $M^3_7(PW_{11}O_{39})$, and $M^3_{10}(SiW_9O_{34})$, with $M^3$ being selected from H, $NH_4^+$, Li and combinations of at least two of the foregoing. Possible are embodiments as well where $M^3$ is selected from Al, Ga, In, Ba, and the stoichiometric coefficients are adjusted accordingly.

In one embodiment of the present invention, the amount of heteropoly acid is in the range of from 0.05 to 1.5 mol-%, preferably 0.15 to 0.9 mol-%, referring to TM.

Said aqueous solution in step (b) may have a pH value in the range of from 2 up to 14, preferably at least 3.5, more preferably from 5 to 11.

In one embodiment of the present invention, the pH value of the aqueous solution used in step (b) is controlled by the addition of a basic Li compound, especially of LiOH.

The pH value - if applicable - is measured at the beginning of step (b). Depending on the order of addition of electrode active material, water and heteropoly acid it is observed that in the course of step (b), the pH value may raise to at least 10, for example 11 to 14. In embodiments wherein the pH value is in the range of from 10 to 11 at the beginning of step (b) it raises to more than 11 to up to 14. In embodiments wherein the pH value is in the range of 3 to below 10 at the beginning of step (b) it raises to 11 to up to 14. It is preferred that the water hardness of said aqueous formulation used in step (b) is at least partially removed, especially calcium. The use of desalinized water is preferred.

In one embodiment of the present invention, in step (b), the electrode active material and the aqueous solution respectively, have a weight ratio in the range of from 1:5 to 5:1, preferably from 2:1 to 1:2.

Step (b) may be supported by mixing operations, for example shaking or in particular by stirring or shearing, see below.

In one embodiment of the present invention, step (b) has a duration in the range of from 1 minute to 90 minutes, preferably 1 minute to less than 60 minutes. A duration of 5 minutes or more is possible in embodiments wherein in step (b), water treatment and water removal are performed overlapping or simultaneously.

In one embodiment of the present invention, step (b) is preferred at a temperature in the range of from 5 to 45°C. Even more preferred is ambient temperature.

In one embodiment of the present invention, treatment according to step (b) and water removal according to step (c) are performed consecutively.

After or during the treatment with an aqueous medium in accordance to step (b), water may be removed by any type of filtration, for example on a band filter or in a filter press.

In one embodiment of the present invention, at the latest 3 minutes after commencement of step (b), step (c) is started. Step (c) includes partially removing the water from treated particulate material, for example by way of a solid-liquid separation, for example by decanting or preferably by filtration. Said "partial removal" may also be referred to as partially separating off.

In one embodiment of step (c), the slurry obtained in step (b) is discharged directly into a centrifuge, for example a decanter centrifuge or a filter centrifuge, or on a filter device, for example a suction filter or a filter press or in a belt filter that is located preferably directly below the vessel in which step (b) is performed. Then, filtration is commenced.

In a particularly preferred embodiment of the present invention, steps (b) and (c) are performed in a filter press or in a filter device with stirrer, for example a pressure filter with stirrer or a suction filter with stirrer. At most 3 minutes after - or even immediately after - having combined starting material and aqueous medium in accordance with step (b), removal of aqueous medium is commenced by starting the filtration. On laboratory scale, steps (b) and (c) may be performed on a Büchner funnel, and steps (b) and (c) may be supported by manual stirring.

In a preferred embodiment, step (b) is performed in a filter device, for example a stirred filter device that allows stirring of the slurry or of the filter cake in the filter device.

In one embodiment of the present invention, the water removal in accordance to step (c) has a duration in the range of from 1 minute to 1 hour.

In one embodiment of the present invention, stirring in step (b) - and (c), if applicable - is performed with a rate in the range of from 1 to 50 revolutions per minute ("rpm"), preferred are 5 to 20 rpm.

In one embodiment of the present invention, filter media may be selected from ceramics, sintered glass, sintered metals, organic polymer films, non-wovens, and fabrics.

In one embodiment of the present invention, steps (b) and (c) are carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform steps (b) and (c) under an atmosphere with a carbon dioxide content below detection limit for example with infrared-light based optical methods.

From step (c), a residue is obtained, preferably in the form of a wet filter cake. The moisture content of such filter cake may be in the range of from 3 to 20 % by weight, preferably 4 to 9 % by weight.

In step (d), the solid residue from step (c) is treated with at least one compound of Al or B or Sb or at least one heteropoly acid or its respective ammonium or lithium salt, thereby depositing at least one element selected from Al, B, Sb, Mo, W, Si, and P, on the surface of said solid residue from step (c).

Examples of compounds of aluminum added in step (d) may be selected from water-soluble and water-insoluble compounds. Examples of water-soluble compounds of Al are $Al_2(SO_4)_3$, $KAl(SO_4)_2$, or $Al(NO_3)_3$. Examples of water-insoluble compounds of AL are, e.g., $Al_2O_3$, $Al(OH)_3$, AlOOH, $Al_2O_3 \cdot aq$, preference being given to AlOOH and $Al_2O_3$. In the context of the present invention, AlOOH does not necessarily bear equal molar amounts of oxide and hydroxide and is sometimes also named as Al(O)(OH).

Inorganic aluminum compounds and especially $Al_2O_3$ and Al(O)(OH) used in step (b) or (d) may be pure ($\geq$ 99.9 mole% Al, referring to total metals including Si) or doped with oxides such as $La_2O_3$, $Ce_2O_3$, titania or zirconia, in amounts of for example 0.1 to 5 mole%.

Examples of compounds of antimony are compounds of Sb(+III) and of Sb(+V). Examples of compounds of Sb(+III) are $Sb(OH)_3$, $Sb_2O_3 \cdot aq$, $Sb_2(SO_4)_3$, SbOOH, $LiSbO_2$, and $Sb_2O_3$. Examples of compounds of Sb(+V) are $Sb_2O_5$, $LiSb_3O_3$, $LiSbO_3$, $Li_3SbO_4$, $Li_5SbO_5$, $Li_7SbO_6$, $Sb_2O_4$ $(Sb(III)Sb(V)O_4)$, and oxyhydroxides of Sb(+V) such as, but not limited to $SbO(OH)_3$, $Sb_2O_4(OH)_2$, $Sb_2O_3(OH)_4$, $Sb_3O_6OH$, $Sb_3O_7OH$. Preferred are $Sb(OH)_3$, $Sb_2O_3 \cdot aq$ and $Sb_2O_3$.

In one embodiment of the present invention, said water-insoluble aluminum or antimony compound has an average particle diameter (D50) in the range of from 200 nm to 5 $\mu$m, preferably 250 nm to 2 $\mu$m, dispersed in water and determined by X-ray diffraction.

In one embodiment of the present invention, the at least one compound of Al or B or Sb is added as a particulate solid, for example as a powder. In another embodiment of the present invention, the at least one compound of Al or Sb or heteropoly acid is added as aqueous slurry or solution, for example with an amount in the range of from 0.05 to 1.5 mol-%, preferably 0.15 to 1.2 mol-%, referring to TM.

The compound added in step (d) is different from the compound contained in the aqueous solution in step (b). It is preferred that the metal added in step (d) is different from the metal contained in the aqueous solution in step (b). It is more preferred that the metal in the compound of aqueous solution in step (b) is different from the metal in the compound of Al or Sb added in step (d), In a preferred embodiment, in step (b) an aqueous solution of a heteropoly acid is used and in step (d) a compound of Al or Sb is added.

In one embodiment of the present invention, steps (b) to (d) are performed in the same vessel, for example in a filter device with stirrer, for example a pressure filter with stirrer or a suction filter with stirrer.

The inventive process includes a subsequent step (e):

(e) thermal treatment of the material obtained from step (d).

Said step (e) is particularly preferred in embodiments wherein said compound(s) of Al or B or Sb are added as aqueous slurry or aqueous solution.

Step (e) may be carried out in any type of oven, for example a roller hearth kiln, a pusher kiln, a rotary kiln, a pendulum kiln, or - for lab scale trials - in a muffle oven.

The temperature of the thermal treatment according to step (e) may be in the range of from 40 to 650°C, preferably 70 to 600°C. Said temperature refers to the maximum temperature of step (e).

It is possible to subject the material obtained from step (d) directly to step (e) or to remove water by a solid-liquid separation method such as filtration.

It is preferred to increase the temperature in step (e) stepwise, or to ramp up the temperature, or to dry the material obtained after step (d) at first at a temperature in the range of from 40 to 250°C, sub-step (e1), before subjecting it to sub-step (e2), for example at above 250 to 650°C.

Said step-wise increase or ramping up may be performed under normal pressure or reduced pressure, for example 0.1 ("vacuum") to 500 mbar.

Step (e) - at its maximum temperature - may be performed under normal pressure.

In one embodiment of the present invention, step (e) is carried out under an oxygen-containing atmosphere, for example air, oxygen-enriched air or pure oxygen.

In embodiments wherein a drying at a temperature in the range of from 40 to 250°C prior to step (e) is performed such drying may be performed with a duration of from 10 minutes to 20 hours.

In one embodiment of the present invention, step (e) is carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform step (e) under an atmosphere with a carbon dioxide content below detection limit for example with infrared-light based optical methods.

In one embodiment of the present invention step (e) has a duration in the range of from 1 to 10 hours, preferably 90 minutes to 6 hours.

In one embodiment of the present invention, the lithium content of an electrode active material is reduced by 0.04 to 1% by weight, preferably 0.05 to 0.5%. Said reduction mainly affects the so-called residual lithium, and the percentage refers to the total lithium content of the starting material.

By carrying out the inventive process, electrode active materials are obtained with excellent electrochemical properties. Without wishing to be bound by any theory, we assume that the decomposition products of heteropoly acid or of B or Sb or Al - as the case may be - may lead to scavenging lithium compounds deposited at the surface of the electrode active material.

Without wishing to be bound by any theory, we assume that the surface of the electrode active material is less negatively influenced by the inventive process than by washing processes without heteropoly acid addition or compound of Al or Sb addition.

In one embodiment of the present invention, an additional step (f) is performed - wherein the electrode active material provided in step (a) is treated with water before step (b). In such embodiments, the water is at least partially removed at the end of step (f).

In one embodiment of the present invention, step (f) is performed by slurrying the electrode active material provided in step (a) in water followed by at least partial removal of the water by a solid-liquid separation method and drying at a maximum temperature in the range of from 50 to 450°C.

In one embodiment of step (f), the water used in step (f) may additionally contain ammonia or at least one transition metal salt, for example a nickel salt or a cobalt salt. Such transition metal salts preferably bear counterions that are not detrimental to an electrode active material. Sulfate and nitrate are feasible. Chloride is not preferred.

In one embodiment of the present invention, step (f) is performed at a temperature in the range of from 5 to 85°C, preferred are 10 to 60°C.

In one embodiment of the present invention, step (f) is performed at normal pressure. It is preferred, though, to perform step (f) under elevated pressure, for example at 10 mbar to 10 bar above normal pressure, or with suction, for example 50 to 250 mbar below normal pressure, preferably 100 to 200 mbar below normal pressure.

Step (f) may be performed, for example, in a vessel that can be easily discharged, for example due to its location above a filter device. Such vessel may be charged with starting material followed by introduction of aqueous medium. In another embodiment, such vessel is charged with aqueous medium followed by introduction of starting material. In another embodiment, starting material and aqueous medium are introduced simultaneously.

In one embodiment of the present invention, the volume ratio of electrode active material and total aqueous medium in step (f) is in the range of from 3:1 to 1:5, preferably from 2:1 to 1:2.

Step (f) may be supported by mixing operations, for example shaking or in particular by stirring or shearing, see below.

In one embodiment of the present invention, step (f) has a duration in the range of from 1 minute to 30 minutes, preferably 1 minute to less than 5 minutes. A duration of 5 minutes or more is possible in embodiments wherein in step (f), water treatment and water removal are performed overlapping or simultaneously.

Cathode active materials obtained by the inventive process have numerous advantages. Cathodes made from such cathode active materials display improved cycling stability, reduced gassing and reduced electrolyte decomposition upon cycling. It may be shown by, e.g., TEM, that heteropoly acids decompose upon thermal treatment and diffuse into the primary particles.

The invention is further illustrated by working examples.

General remarks: N-methyl-2-pyrrolidone: NMP.

Ultra-dry air: dehumidified air, dew point of less than -30°C, and $CO_2$ content less than 50 ppm

$H_4(SiW_{12}O_{40}) \cdot nH_2O$ (n=30) was dissolved in water. The resulting solution is named "$SiW_{12} \cdot aq$" hereafter.

Synthesis of a cathode active material

I.1 Synthesis of a precursor TM-OH.1

A stirred tank reactor was filled with deionized water and 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained Ni, Co and Mn at a molar ratio of 8.3:1.2:0.5 and a total transition metal concentration of 1.65 mol/kg. The aqueous sodium hydroxide solution was a 25 wt.% sodium hydroxide solution and 25 wt.% ammonia solution in a weight ratio of 6. The pH value was kept at 12 by the separate feed of an aqueous sodium hydroxide solution. Beginning with the start-up of all feeds, mother liquor was removed continuously. After 33 hours all feed flows were stopped. The mixed transition metal (TM) hydroxide precursor TM-OH.1 was obtained by filtration of the resulting suspension, washing with distilled water, drying at 120°C in air and sieving.

I.2 Conversion of TM-OH.1 into cathode active materials

I.2.1 Manufacture of a base cathode active material, B-CAM.1, step (a.1)

B-CAM.1 (base): The mixed transition metal hydroxide precursor TM-OH.1 was mixed with Li-OH monohydrate in a Li/TM molar ratio of 1.03. The mixture was heated to 765°C and kept for 10 hours in a forced flow of a mixture of oxygen. After cooling to ambient temperature the resultant powder was deagglomerated and sieved through a 32 $\mu$m mesh to obtain the base cathode active material B-CAM 1.

D50 = 11.0 $\mu$m determined using the technique of laser diffraction in a Mastersize 3000 instrument from Malvern Instruments. Residual moisture at 250 °C was determined to be 300 ppm.

I.2.2 Manufacture of a comparative cathode active material, steps (b.1) to (e.1)

Step (b.1): A beaker was charged with 67 ml of de-ionized water. An amount of 100 g BC-CAM.1 was added. The resultant slurry was stirred at ambient temperature over a period of 5 minutes, during said stirring the slurry temperature was maintained at 25°C $\pm$ 5°C.

Step (c.1): Then, the water was removed by filtration through a filter press. A wet filter cake remained.

No step (d) was performed.

Step (e1.1): The resultant filter cake was dried in vacuum at 70°C for 2 hours and then at 185°C over a period of 10 hours. Then, by sieving obtained powder with 45 $\mu$m sieve, cathode active material C-CAM.1 was obtained.

I.2.3. Synthesis of inventive cathode active materials, example of CAM.2

Step (a.1) was performed as above.

Step (b.2): A beaker was charged with 67 ml of de-ionized water. An amount of 100 g B-CAM.1 was added. A suspension of freshly precipitated hydroxide or oxyhydroxide of Si or W was obtained to which SiW$_{12}$·aq was added. The molar ratio of W/TM was 0.003. The resultant slurry was stirred at ambient temperature over a period of 5 minutes.

Step (c.2): Then, the water was removed by filtration through a filter press. A wet filter cake remained.

Step (d.2): Al$_2$(SO$_4$)$_3$ aq was added to the wet filter cake resulting from step (c.1) in accordance with Table 1. The molar ratio of Al/(TM) was 0.003. The wet filter cake with Al$_2$(SO$_4$)$_3$ aq was passed into a plastic bag and scrambled for 5 minutes at ambient temperature.

Step (e1.2): The resultant filter cake was dried in vacuum at 70°C for 2 hours and then at 185°C over a period of 10 hours. Then, by sieving the obtained powder with 45 $\mu$m sieve, inventive cathode active material CAM.2 was obtained.

Example of CAM.3

Steps (a.1) to (e1.2) were performed as above.

Step (e2.3): The resultant powder was heated to 400°C for three hours at 300°C in a forced flow of oxygen in a muffle oven.

Further inventive cathode active materials were made accordingly by modifying the amount of Al$_2$(SO$_4$)$_3$, or SiW$_{12}$·aq, or Sb$_2$O$_3$ in step (b) or introducing Al$_2$(SO$_4$)$_3$, or SiW$_{12}$·aq, or H$_3$BO$_3$ in step (d) in addition to or instead of SiW$_{12}$·aq and Al$_2$(SO$_4$)$_3$. The results are summarized in Table 1.

# EP 4 218 066 B1

Table 1: Initial charge and discharge capacity with initial reaction resistance, coin cell

| CAM | Compound added in step (b), mol-% vs. TM | Compound added in step (d), mol-% vs. TM | Step (e2), [°C] |
|---|---|---|---|
| C-CAM.1 | none | none | none |
| CAM.2 | 0.3 % $SiW_{12} \cdot aq$ | 0.3 % $Al_2(SO_4)_3$ | none |
| CAM.3 | 0.3 % $SiW_{12} \cdot aq$ | 0.3 % $Al_2(SO_4)_3$ | 300 |
| CAM.4 | 0.3 % $SiW_{12} \cdot aq$ | 0.3 % $Al_2(SO_4)_3$ | 400 |
| CAM.5 | 0.3 % $SiW_{12} \cdot aq_2$ | 0.3 % $Al_2(SO_4)_3$ | 500 |
| CAM.6 | 0.3 % $Al_2(SO_4)_3$ | 0.15 % $SiW_{12} \cdot aq$ | 300 |
| CAM.7 | 0.3 % $Al_2(SO_4)_3$ | 0.15 % $SiW_{12} \cdot aq$ | 450 |
| CAM.8 | 0.6 % $Al_2(SO_4)_3$ | 0.15 % $SiW_{12} \cdot aq$ | 400 |
| CAM.9 | 0.6 % $Al_2(SO_4)_3$ | 0.3 % $SiW_{12} \cdot aq$ | 400 |
| CAM.10 | 0.6 % $Al_2(SO_4)_3$ | 0.15 % $SiW_{12} \cdot aq$ | 450 |
| CAM. 11 | 0.6 % $Al_2(SO_4)_3$ | 0.3 % $SiW_{12} \cdot aq$ | 450 |
| CAM.12 | 0.6% $Sb_2O_3$ | 0.3 % $Al_2(SO_4)_3$ | 300 |
| CAM.13 | 0.3 % $Al_2(SO_4)_3$ | 0.9% $B(OH)_3$ | 300 |
| CAM.14 | 0.6% $Sb_2O_3$ | 0.9% $B(OH)_3$ | 300 |
| case of $SiW_{12}$, mol-% refer to W | | | |

II. Testing of Cathode Active Material

II.1 Electrode manufacture, general procedure

Positive electrode: PVDF binder (Solef® 5130) was dissolved in NMP (Merck) to produce a 8.0 wt.% solution. For electrode preparation, binder solution (4 wt.%), and carbon black (Li250, 3.5 wt.-%) were suspended in NMP. After mixing using a planetary centrifugal mixer (ARE-250, Thinky Corp.; Japan), either any of inventive CAM.2 to CAM.13 or a base cathode active material B-CAM.1, (92.5 wt.%) was added and the suspension was mixed again to obtain a lump-free slurry. The solid content of the slurry was adjusted to 65%. The slurry was coated onto Al foil using a KTF-S roll-to-roll coater (Mathis AG). Prior to use, all electrodes were calendared. The thickness of cathode material was 45 $\mu$m, corresponding to 15 mg/cm$^2$. All electrodes were dried at 120°C for 7 hours before battery assembly.

II.2 Electrolyte Manufacture

A base electrolyte composition was prepared containing 12.7 wt% of $LiPF_6$, 26.2 wt% of ethylene carbonate (EC), and 61.1 wt% of ethyl methyl carbonate (EMC) (EL base 1).

II.3 Test cell Manufacture

II.3.1 Coin-type half cells

Coin-type half cells (20 mm in diameter and 3.2 mm in thickness) comprising a cathode prepared as described under III.1.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.15 mL of the EL base 1 which is described above (III.2) were introduced into the coin cell.

III. Evaluation of coin half-cell performance

Cell performance were evaluated using the produced coin type battery. For the battery performances, initial capacity and reaction resistance of cell were measured. The initial performance and cycle were measured as follows: Coin half cells according to II.3.1 were tested in a voltage range between 4.3 V to 2.8 V at room temperature. For the initial cycles, the initial lithiation was conducted in the CC-CV mode, i.e., a constant current (CC) of 0.1 C was applied until reaching 0.01 C. After 10 min resting time, reductive lithiation was carried out at constant current of 0.1 C up to 2.8 V. For the cycling, the current density is 0.1 C, and charging/discharging was repeated 25 times.

The cell reaction resistance was calculated by the following method:

After the evaluation of the initial performance, the coin cells are recharged to 4.3V, and the resistance is measured by the electrochemical impedance spectroscopy (EIS) method using po-tentiostat and frequency response analyzer system (Solartron CellTest System 1470E). From the EIS spectra, Ohmic resistance and reactive resistance were obtained. The results are summarized in Table 2. [%] relative resistance is based on the resistance of cell based on C-CAM.1 as 100%.

The cycle retention was tested by the following method:

After the 25 cycles under 0.1C, the coin cells were recharged to 4.3V, and the resistance was measured again by the electrochemical impedance spectroscopy (EIS) method. The ratio of the resistance value of $26^{th}$ cycle and second cycle was defined as the resistance growth. The results are summarized in Table 2. [%] relative resistance growth is based on the resistance growth of cell based on C-CAM.1 as 100%.

Table 2: Initial charge and discharge capacity with initial reaction resistance, coin cell

| CAM | $1^{st}$ charge capacity [mA·h/g] | Coulombic efficiency [%] | Relative resistance $2^{nd}$ cycle [%] | Relative R growth $R_{26th}$ / $R_{2nd}$ [%] |
|---|---|---|---|---|
| C-CAM.1 | 213.8 | 93.2 | 100.0 | 100.0 |
| CAM.2 | 208.8 | 92.5 | 54.5 | 8.6 |
| CAM.3 | 216.1 | 93.9 | 30.8 | 12.7 |
| CAM.4 | 217.5 | 94.9 | 22.0 | 11.5 |
| CAM.5 | 215.6 | 95.5 | 18.6 | 10.1 |
| CAM.6 | 215.0 | 93.5 | 44.6 | 9.9 |
| CAM.7 | 212.6 | 92.9 | 25.7 | 14.3 |
| CAM.8 | 211.9 | 93.1 | 29.7 | 10.2 |
| CAM.9 | 211.3 | 93.0 | 29.2 | 11.2 |
| CAM.10 | 211.9 | 93.5 | 26.4 | 10.0 |
| CAM. 11 | 211.7 | 93.7 | 26.1 | 10.0. |
| CAM.12 | 210.7 | 93.0 | 53.9 | 5.7 |
| CAM.13 | 209.7 | 91.4 | 69.2 | 10.2 |
| CAM.14 | 204.9 | 89.6 | 83.1 | 4.3 |
| R: resistance n.d.: not determined | | | | |

## Claims

1.  Process for the manufacture of a coated cathode active material comprising the steps of

    (a) providing a particulate electrode active material according to general formula $Li_{1+x}TM_{1-x}O_2$, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni,
    (b) treating said particulate electrode active material with an aqueous solution of at least one heteropoly acid selected from phosphotungstic acid, phosphomolybdic acid, tungstosilicic acid, molybdosilicic acid, and from their respective ammonium and lithium salts , thereby depositing at least one element selected from Mo, W, Si and P on the surface of said particulate electrode active material, wherein said treatment is supported by mixing operations selected from shaking, stirring and shearing,
    (c) removing the water by filtration,
    (d) treating the solid residue obtained from step (c) with at least one water-soluble compound of Al or B or Sb or at least one heteropoly acid or its respective ammonium or lithium salt by adding least one compound of Al or B or Sb as a particulate solid or by adding the at least one compound of Al or Sb or heteropoly acid as aqueous slurry or solution, thereby depositing at least one element selected from Al, B, Sb, Mo, W, Si, and P, on the surface of said solid residue from step (c), and

(e) treating the residue obtained from step (d) thermally,

wherein the compound added in step (d) is different from the compound contained in the aqueous solution in step (b) with respect to the metal.

2. Process according to claim 1 wherein TM is a combination of metals according to general formula (I)

$$(Ni_aCo_bMn_c)_{1-d}M_d \qquad (I)$$

with

a being in the range of from 0.6 to 0.99,
b being zero or in the range of from 0.01 to 0.2,
c being in the range of from zero to 0.2, and
d being in the range of from zero to 0.1,
M is at least one of Al, Mg, Nb, Ta, Ti, Ge, Mo, W and Zr, and

$$a + b + c = 1.$$

3. Process according to claim 1 or 2 wherein said compound of Al or B or Sb in step (d) is added as particulate solid.

4. Process according to any of the preceding claims wherein said compound of Al or B or Sb in step (d) is added as aqueous solution or slurry.

5. Process according to any of the preceding claims wherein step (e) includes a calcination step at a maximum temperature in the range of from 300 to 700°C.

6. Process according to any of the preceding claims wherein step (e) includes a drying step at a maximum temperature in the range of from 40 to 250°C.

7. Process according to any of the preceding claims comprising an additional step (f), wherein step (f) includes treating the electrode active material provided in step (a) with water and at least partially removing the water before subjecting the electrode active material to step (b).

**Patentansprüche**

1. Verfahren zur Herstellung eines beschichteten Kathodenaktivmaterials, umfassend die Schritte

(a) Bereitstellen eines aktiven Materials aus Partikelelektrode gemäß der allgemeinen Formel $Li_{1+x}TM_{1-x}O_2$, wobei TM Ni und gegebenenfalls mindestens eines von Co und Mn ist, und gegebenenfalls mindestens ein Element, ausgewählt aus Al, Mg und Ba, Übergangsmetalle außer Ni, Co und Mn, und x im Bereich von Null bis 0,2 liegt, wobei mindestens 50 Mol-% des Übergangsmetalls von TM Ni ist,
(b) Behandeln des aktiven Materials der partikulären Elektrode mit einer wässrigen Lösung von mindestens einer Heteropolysäure , ausgewählt aus Phosphotungssäure, Phosphomolybdsäure, Wolframkieselsäure, Molybdokieselsäure und aus ihren jeweiligen Ammonium- und Lithiumsalzen , wodurch mindestens ein Element, ausgewählt aus Mo, W, Si und P, auf der Oberfläche des aktiven Materials der Partikelelektrode abgeschieden wird, wobei die Behandlung durch Mischvorgänge unterstützt wird, die durch Schütteln, Rühren und Scheren ausgewählt sind,
(c) Entfernen des Wassers durch Filtration,
(d) Behandlung des aus Schritt c gewonnenen festen Rückstands mit mindestens einer wasserlöslichen Verbindung von Al oder B oder Sb oder mindestens einer Heteropolysäure oder ihrem jeweiligen Ammonium- oder Lithiumsalz durch Zugabe von mindestens einer Verbindung von Al oder B oder Sb als partikelförmigem Feststoff oder durch Zugabe von mindestens einer Verbindung von Al oder Sb oder Heteropolysäure als wässrige Aufschlämmung oder Lösung, wodurch mindestens ein Element, ausgewählt aus Al, B, Sb, Mo, W, Si und P, auf der Oberfläche des festen Rückstands aus Schritt (c) abgeschieden wird, und
(e) den Rückstand aus Schritt d) thermisch zu behandeln,

wobei sich die in Schritt (d) hinzugefügte Verbindung von der in der wässrigen Lösung in Schritt (b) enthaltenen Verbindung in Bezug auf das Metall unterscheidet.

2. Verfahren nach Anspruch 1, wobei TM eine Kombination von Metallen nach der allgemeinen Formel (I) ist

$$(Ni_aCo_bMn_c)_{1-d}M_d \qquad (I)$$

mit

a im Bereich von 0,6 bis 0,99 liegt,
b Null ist oder im Bereich von 0,01 bis 0,2 liegt,
c im Bereich von Null bis 0,2 liegt und
d im Bereich von Null bis 0,1 liegt,
M mindestens eines von Al, Mg, Nb, Ta, Ti, Ge, Mo, W und Zr ist und

$$a + b + c = 1.$$

3. Verfahren nach Anspruch 1 oder 2, wobei die Verbindung von Al oder B oder Sb in Schritt (d) als partikulärer Feststoff zugegeben wird.

4. Verfahren nach einem der vorhergehenden Ansprüche, wobei die Verbindung von Al oder B oder Sb in Schritt (d) als wässrige Lösung oder Aufschlämmung zugegeben wird.

5. Verfahren nach einem der vorhergehenden Ansprüche, wobei Schritt (e) einen Kalzinierungsschritt bei einer maximalen Temperatur im Bereich von 300 bis 700 °C umfasst.

6. Verfahren nach einem der vorhergehenden Ansprüche, wobei Schritt (e) einen Trocknungsschritt bei einer maximalen Temperatur im Bereich von 40 bis 250 °C umfasst.

7. Verfahren nach einem der vorhergehenden Ansprüche, das einen zusätzlichen Schritt (f) umfasst, wobei Schritt (f) das Behandeln des in Schritt (a) bereitgestellten Elektrodenaktivmaterials mit Wasser und das zumindest teilweise Entfernen des Wassers umfasst, bevor das Elektrodenaktivmaterial dem Schritt (b) unterzogen wird.

**Revendications**

1. Procédé de fabrication d'un matériau actif de cathode revêtu comprenant les étapes

(a) fournissant un matériau actif d'électrode particulaire selon la formule générale $Li_{1+x}TM_{1-x}O_2$, dans lequel TM est Ni et, éventuellement, au moins un élément de Co et de Mn, et, éventuellement, au moins un élément choisi parmi Al, Mg et Ba, métaux de transition autres que Ni, Co et Mn, et x est compris entre zéro et 0,2, où au moins 50 % molaire du métal de transition de TM est du Ni,
(b) traiter ledit matériau actif d'électrode particulaire avec une solution aqueuse d'au moins un acide hétéropoly choisi parmi l'acide phosphotungstique, l'acide phosphomolybdique, l'acide tungstosilicique, l'acide molybdosilicique et à partir de leurs sels d'ammonium et de lithium respectifs , déposant ainsi au moins un élément choisi parmi Mo, W, Si et P à la surface dudit matériau actif d'électrode particulaire, dans lequel ledit traitement est soutenu par des opérations de mélange choisies parmi l'agitation, l'agitation et le cisaillement,
(c) l'élimination de l'eau par filtration,
(d) traiter le résidu solide obtenu à l'étape c) avec au moins un composé soluble dans l'eau d'Al ou de B ou de Sb ou d'au moins un acide hétéropoly ou son sel d'ammonium ou de lithium respectif en ajoutant au moins un composé d'Al ou de B ou de Sb en tant que solide particulaire ou en ajoutant au moins un composé d'Al ou de Sb ou d'acide hétéropoly en suspension aqueuse ou en solution, déposant ainsi au moins un élément choisi parmi Al, B, Sb, Mo, W, Si et P, à la surface dudit résidu solide de l'étape (c), et

(e) le traitement thermique des résidus obtenus à l'étape (d),

dans lequel le composé ajouté à l'étape (d) est différent du composé contenu dans la solution aqueuse à l'étape (b) en ce qui concerne le métal.

2. Procédé selon la revendication 1, dans lequel TM est une combinaison de métaux selon la formule générale (I)

$$(Ni_aCo_bMn_c)_{1-d}M_d \qquad (I)$$

avec

a étant compris entre 0,6 et 0,99,
b étant nulle ou comprise entre 0,01 et 0,2,
c étant compris entre zéro et 0,2, et
d étant dans la gamme de zéro à 0,1,
M est au moins l'un des deux suivants : Al, Mg, Nb, Ta, Ti, Ge, Mo, W et Zr, et

$$a + b + c = 1.$$

3. Procédé selon la revendication 1 ou 2, dans lequel ledit composé d'Al ou de B ou de Sb à l'étape (d) est ajouté en tant que solide particulaire.

4. Procédé selon l'une quelconque des revendications précédentes, dans lequel ledit composé d'Al ou de B ou de Sb à l'étape (d) est ajouté sous forme de solution aqueuse ou de boue.

5. Procédé selon l'une quelconque des revendications précédentes, dans lequel l'étape (e) comprend une étape de calcination à une température maximale dans la plage de 300 à 700°C.

6. Procédé selon l'une quelconque des revendications précédentes, dans lequel l'étape (e) comprend une étape de séchage à une température maximale comprise entre 40 et 250°C.

7. Procédé selon l'une quelconque des revendications précédentes comprenant une étape supplémentaire (f), dans laquelle l'étape (f) comprend le traitement du matériau actif de l'électrode fourni à l'étape (a) avec de l'eau et l'élimination au moins partielle de l'eau avant de soumettre le matériau actif de l'électrode à l'étape (b).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8993051 B
- JP 4789066 B
- JP 5139024 B
- US 20150372300 A
- WO 2020069886 A1